# EUROPEAN PATENT SPECIFICATION

(11) **EP 2 501 151 B1**
(45) Date of publication and mention of the grant of the patent: **16.08.2017**
(21) Application number: 10839156.6
(22) Date of filing: 02.12.2010
(51) Int. Cl.: H04Q 9/00, G06F 3/0488

(54) **INFORMATION PROCESSING DEVICE, INFORMATION PROCESSING METHOD, PROGRAM, APPARATUS TO BE CONTROLLED, AND INFORMATION PROCESSING SYSTEM**
INFORMATIONSVERARBEITUNGSVORRICHTUNG, INFORMATIONSVERARBEITUNGSVERFAHREN, PROGRAMM, ZU STEUERNDE VORRICHTUNG UND INFORMATIONSVERARBEITUNGSSYSTEM
DISPOSITIF DE TRAITEMENT D'INFORMATIONS, PROCÉDÉ DE TRAITEMENT D'INFORMATIONS, PROGRAMME, APPAREIL À COMMANDER ET SYSTÈME DE TRAITEMENT D'INFORMATIONS

(30) Priority: 25.12.2009 JP 2009295582
(43) Date of publication of application: 19.09.2012
(73) Proprietor: Sony Corporation, Tokyo 108-0075 (JP)
(72) Inventor: ITO, Shin, Tokyo 108-0075 (JP); OHASHI, Yoshinori, Tokyo 108-0075 (JP); YAMADA, Eiju, Tokyo 108-0075 (JP)
(74) Representative: Witte, Weller & Partner Patentanwälte mbB
(86) International application number: PCT/JP2010/071579
(87) International publication number: WO 2011/077921

(56) References cited:
- WO-A2-00/59212
- WO-A2-2007/086633
- JP-A- 2005 109 746
- JP-A- 2007 221 194
- JP-A- 2008 258 853
- US-A1- 2003 193 426
- US-A1- 2005 028 112
- US-A1- 2006 044 478

## Description

### Technical Field

The present invention relates to an information processing apparatus, an information processing method, a program, a control target device, and an information processing system.

### Background Art

In recent years, control target devices including display devices such as TVs and recording devices such as video recorders have been in widespread use mainly in households. In order to cause such a control target device to execute desired processing, a user can use an information processing apparatus which controls the control target device by transmitting a command using a wireless signal to the control target device and causing the control target device to execute the command, for example. The information processing apparatus is referred to as remote control or remote commander, and, as the types thereof, there are exemplified an RF (Radio Frequency) remote control and an infrared remote control.

Meanwhile, various attempts are conducted in order for the user to intuitively understand the operation information input to the information processing apparatus. For example, there is a touch panel which feeds back a sense of the operation by giving vibration to a fingertip of the user operating the information processing apparatus (for example, refer to Patent Literature 1). The feedback method involving giving vibration to the fingertip of the user performing the operation in this way is referred to as tactile feedback. According to such technology, the user can understand the operation information input to the information processing apparatus by means of a tactile sense.

US 2003/193426 A1 discloses a universal remote control, which includes a display screen and a user input mechanism. The universal remote control also includes a processing unit that is configured to display information on the display screen and to accept selection data from the user input mechanism. The universal remote control additionally includes a wireless communication mechanism that is configured to provide communications between the processing unit and an appliance or computer program running on a computer system. The appliance provides information to be displayed on the display screen, and information entered through the user input mechanism is communicated to the appliance. It is said that since the appliance provides the information to be displayed on the display screen and also interprets the entries on the input mechanism, the universal remote control needs no special knowledge about the appliance.

US 200/6044478 A1 discloses a television remote control and a system utilizing the television remote control for controlling a television. The television remote control comprises a wireless communication unit and an audio interface coupled to the wireless communication unit. The wireless communication unit initiates a wireless communication channel with the television and receives audio data from the television through the wireless communication channel. The audio interface receives the audio data and outputs audio of the audio data.

### Citation List

### Patent Literature

- Patent Literature 1:: JP 2009-169612A

### Summary of Invention

### Technical Problem

However, according to the above-mentioned technology involving causing the user to intuitively understand the operation information, it is only that the user can intuitively understand what operation information the user himself/herself inputs to the information processing apparatus. That is, there was an issue that the user could not confirm a result as the operation result by viewing the information processing apparatus, the result being obtained by the information processing apparatus creating a command based on the operation information input by the user and the control target device executing processing in accordance with the command. Accordingly, when the user performed the input of the operation information while viewing the information processing apparatus in his/her hand, it was necessary that the user confirm the operation result by looking away from his/her hand and viewing the screen or the like which is output by an output device such as a display connected to the control target device.

The present invention has been made in the view of the circumstances described above, and an object of the present invention is to provide novel and improved technology capable of performing confirmation of an operation result, which is the result of processing executed by the control target device in accordance with the command created based on the operation information, while viewing the information processing apparatus in his/her hand.

### Solution to Problem

According to an aspect of the present invention, in order to achieve the above-mentioned object, there is provided an information processing apparatus as defined in claim 1, an information processing method as defined in claim 10 and a control target device as defined in claim 12.

The input section may be configured from a touch panel, and the operation information acquisition section may acquire, as the movement operation, information indicating a drag operation or a flick operation performed by a user.

The command notification section may approximate the direction specified by the movement operation to any one of one or a plurality of predetermined directions, and may notify the control target device of information indicating the approximated predetermined direction, the information being included in the movement command as the movement direction information.

In a case where the operation information acquired by the operation information acquisition section is information indicating a movement start operation, the command notification section may notify the control target device of a movement start command including movement start direction information indicating a direction specified by the movement start operation, as the notification command, in a case where the operation information acquired by the operation information acquisition section is information indicating a movement continuation operation, the command notification section may notify the control target device of a movement continuation command as the notification command, and in a case where the operation information acquired by the operation information acquisition section is information indicating a movement end operation, the command notification section may notify the control target device of a movement end command as the notification command.

The operation result acquisition section may acquire a result as the operation result from the control target device through the communication section, the result being obtained by starting processing of moving a predetermined object by the control target device in a direction indicated by the movement start direction information included in the movement start command, executing processing of continuously moving the predetermined object by the control target device in a direction indicated by the movement start direction information based on the movement continuation command, and terminating processing of moving the predetermined object by the control target device based on the movement end command.

The operation result acquisition section may acquire, as the operation result from the control target device through the communication section, valid direction information indicating a direction in which the predetermined object can be further moved after execution of processing of continuously moving the predetermined object performed by the control target device.

The input section may be configured from a touch panel, and the operation information acquisition section may acquire, as the movement operation, information indicating a swipe operation performed by a user.

In a case where the operation information acquired by the operation information acquisition section is information indicating a decision operation, the command notification section may notify the control target device of a decision command as the notification command.

The input section may be configured from a touch panel, and the operation information acquisition section may acquire, as the decision operation, information indicating a tap operation performed by a user.

The operation result acquisition section may acquire, as the operation result from the control target device through the communication section, information indicating whether predetermined processing, which is executed by the control target device based on the decision command, is performed normally.

The display control section may cause the display section to further display the operation information acquired by the operation information acquisition section.

### Advantageous Effects of Invention

As described above, according to the present invention, confirmation of an operation result, which is the result of processing executed by the control target device in accordance with the command created based on the operation information, can be performed while viewing the information processing apparatus in his/her hand.

### Brief Description of Drawings

[Fig. 1] Fig. 1 is a diagram showing a configuration of an information processing system according to an embodiment of the present invention.
[Fig. 2] Fig. 2 is a diagram showing operation information input to a remote commander according to the embodiment and examples of commands generated by the input of the operation information.
[Fig. 3] Fig. 3 is a diagram showing operation information input to the remote commander according to the embodiment and display examples when the remote commander displays the operation information.
[Fig. 4] Fig. 4 is a diagram showing a functional configuration of the remote commander according to the embodiment.
[Fig. 5] Fig. 5 is a diagram showing a functional configuration of a control target device according to the embodiment.
[Fig. 6] Fig. 6 is a diagram showing an example of a focus displayed by the control target device when a direction (valid direction) in which a focus can be moved is used as an operation result.
[Fig. 7] Fig. 7 is a diagram showing an example of an operation result displayed by the remote commander when the direction (valid direction) in which the focus can be moved is used as the operation result.
[Fig. 8] Fig. 8 is a sequence diagram showing a flow of processing executed by the information processing system when the focus is moved by a flick operation (in particular, when the remote commander inquires of the control target device about a valid command every time detecting a contact with a touch panel).
[Fig. 9] Fig. 9 is a sequence diagram showing a flow of processing executed by the information processing system when the focus is successively moved by a swipe operation.
[Fig. 10] Fig. 10 is a sequence diagram showing a flow of processing executed by the information processing system when the focus is moved by a flick operation (in particular, when the remote commander inquires of the control target device about a valid command regularly).
[Fig. 11 Fig. 11 is a sequence diagram showing a flow of processing (in particular, a changed valid command every time a valid command is changed) executed by the information processing system when the focus is moved by the flick operation.
[Fig. 12] Fig. 12 is a sequence diagram showing a flow of processing executed by the information processing system when the focus is moved by the flick operation (in particular, when the valid command is included in a response to the flick operation).
[Fig. 13] Fig. 13 is a flowchart showing a flow of processing executed by the remote commander according to the embodiment of the present invention.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Note that the description is given in the following order.
1. First embodiment
   1-1. Configuration of information processing system
   1-2. Example of command generated by input of operation information
   1-3. Display examples when remote commander displays operation information
   1-4. Functional configuration of remote commander
   1-5. Functional configuration of control target device
   1-6. Example of focus displayed by control target device
   1-7. Example of operation result displayed by remote commander
   1-8. Processing executed by information processing system when performing flick operation (Part 1)
   1-9. Processing executed by information processing system when performing swipe operation
   1-10. Processing executed by information processing system when performing flick operation (Part 2)
   1-11. Processing executed by information processing system when performing flick operation (Part 3)
   1-12. Processing executed by information processing system when performing flick operation (Part 4)
   1-13. Flow of processing executed by remote commander
2. Modified example
3. Conclusion

### <1. First embodiment>

### [1-1. Configuration of information processing system]

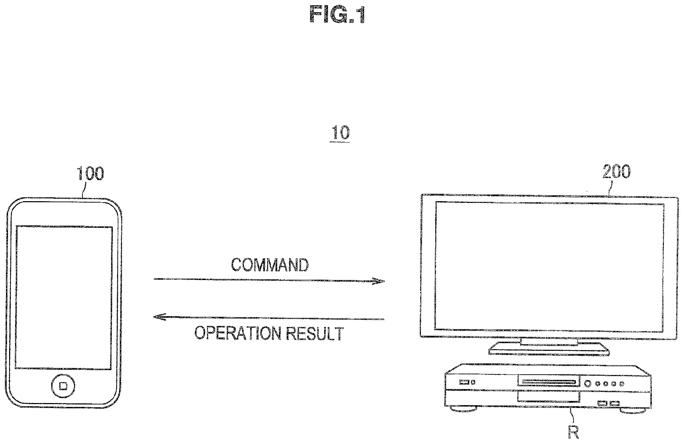

Fig. 1 is a diagram showing a configuration of an information processing system according to an embodiment of the present invention. With reference to Fig. 1, the configuration of the information processing system according to the embodiment will be described.

As shown in Fig. 1, an information processing system 10 according to the embodiment of the present invention includes a remote commander 100 serving as an example of the information processing apparatus, and a control target device 200. When a user inputs operation information to the remote commander 100, the remote commander 100 creates a command based on the operation information, the input of which is accepted, and transmits the command to the control target device 200. The control target device 200 receives the command from the remote commander 100, executes processing corresponding to the received command, and sends back to the remote commander 100 a result obtained by the execution as an operation result. The remote commander 100 displays the operation result received from the control target device 200. The remote commander 100 and the control target device 200 are capable of communicating with each other using a wireless signal, for example.

The hardware configuration of the remote commander 100 is not particularly limited, and the remote commander 100 may be a mobile information terminal such as a PC (Personal Computer), a mobile phone, or a PDA (Personal Digital Assistant), a game machine, or any of various home information appliances. In the present embodiment, the description will be made of the case where the remote commander 100 is a mobile information terminal having a touch panel input device and a display device with a relatively small display area.

The hardware configuration of the control target device 200 is also not particularly limited, and may be any as long as it has a function of executing processing in accordance with the command transmitted by the remote commander 100. In the present embodiment, although the description will be made of the case where the control target device 200 is a display device such as a TV, the control target device 200 may also be a recording device R or the like, for example.

In the present embodiment, there will be described a technique for the user to perform confirmation of an operation result, which is the result of processing executed by the control target device 200 in accordance with the command created based on the operation information input to the remote commander 100, while viewing the remote commander 100 in his/her hand.

### [1-2. Example of command generated by input of operation information]

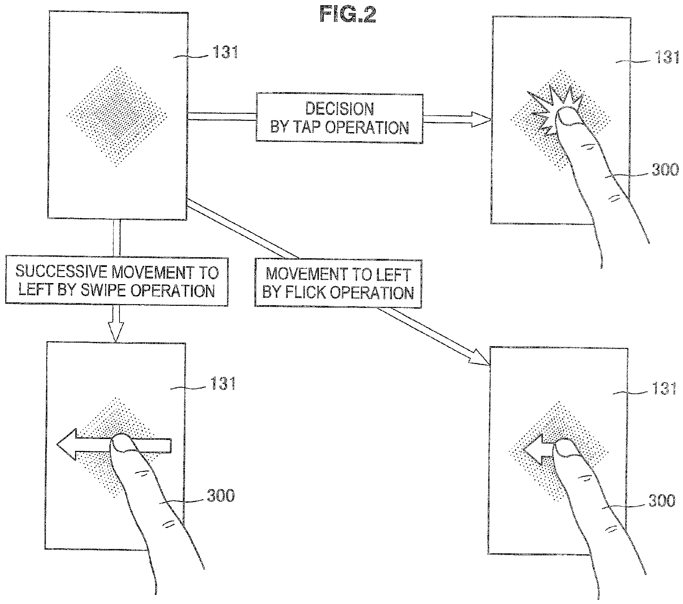

Fig. 2 is a diagram showing operation information input to a remote commander according to an embodiment of the present invention and examples of commands generated by the input of the operation information. With reference to Fig. 2, there will be described the operation information input to the remote commander according to the embodiment and the examples of commands generated by the input of the operation information.

The operation information mentioned above may be input to the remote commander 100 using an operating object 300 such as a user's finger as shown in Fig. 2, for example. However, the type of the operating object 300 is not limited to the user's finger, and may also be an electronic pen, for example. Further, as shown in Fig. 2, the remote commander 100 has a display section displaying a screen 131, and a touch panel is provided in a superimposed manner with the display section displaying the screen 131. However, the position at which the touch panel is provided is not particularly limited.

As shown in Fig. 2, there are various types of operation information. For example, there is a tap operation which is an operation in which a user brings the operating object 300 into contact with the touch panel. Further, there is also a flick operation in which the user moves the operating object 300 at desired speed while keeping the operating object 300 in contact with the touch panel and releases the operating object 300 from the touch panel at a desired position. In addition, there is a swipe operation in which the user moves the operating object 300 at desired speed while keeping the operating object 300 in contact with the touch panel and continues the contact of the operating object 300 with the touch panel for a desired time period at the destination. Further, although not shown in Fig. 2, there is also an operation such as a drag operation in which the operating object 300 is moved while being kept in contact with the touch panel.

In the present embodiment, the tap operation represents decision, and when the tap operation is performed, the remote commander 100 transmits a decision command, which is a command indicating that a decision is made, to the control target device 200 via a wireless signal. Further, the flick operation represents movement, and when the flick operation is performed, the remote commander 100 transmits a movement command, which is a command indicating that movement is to be made in the direction in which the operating object 300 moves while being kept in contact with the touch panel, to the control target device 200 via a wireless signal. Further, when the flick operation is performed, the remote commander 100 may transmit the movement command including the speed of the operating object 300 immediately before the operating object 300 is released from the touch panel in the flick operation.

For example, also in the case where the drag operation is performed, the remote commander 100 can transmit the same command as the case where the flick operation is performed to the control target device 200. When the drag operation is performed, the remote commander 100 may transmit the movement command including the speed at which the operating object 300 moved while being kept in contact with the touch panel in the flick operation.

The swipe operation represents successive movement, and when the swipe operation is started, the remote commander 100 transmits a movement start command, which is a command indicating that the successive movement is to be started in the direction in which the operating object 300 moves while being kept in contact with the touch panel, to the control target device 200 via a wireless signal. While the swipe operation is continued, the remote commander 100 transmits a movement continuation command, which is a command indicating that the successive movement is to be continued, to the control target device 200 via a wireless signal. When the swipe operation is terminated, the remote commander 100 transmits a movement end command, which is a command indicating that the successive movement is to be terminated, to the control target device 200 via a wireless signal. When the swipe operation is performed, the remote commander 100may transmit the movement start command including the speed at which the operating object 300 moved while being kept in contact with the touch panel in the swipe operation.

### [1-3. Display examples when remote commander displays operation information]

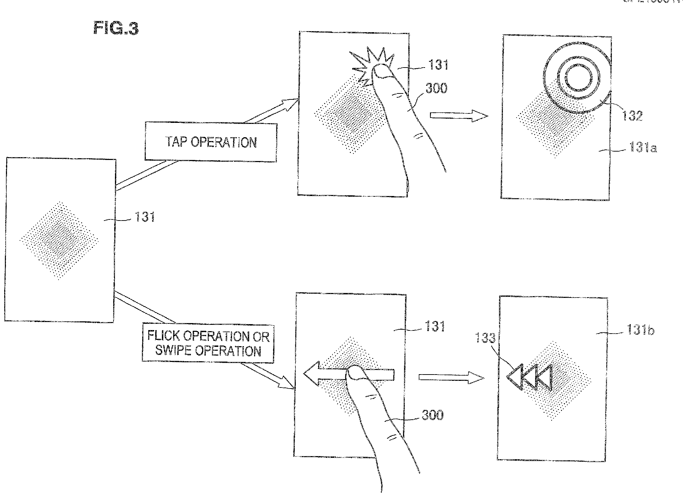

Fig. 3 is a diagram showing operation information input to the remote commander according to an embodiment of the present invention and display examples when the remote commander displays the operation information. With reference to Fig. 3, there will be described the operation information input to the remote commander according to the embodiment and the display examples when the remote commander displays the operation information.

As shown in Fig. 3, the remote commander 100 is capable of displaying the screen 131 including the operation information input from the user. For example, when the user performs the tap operation to the touch panel, the remote commander 100 can detect the tapped position as a tap position, and can display a screen 131a including a predetermined mark having the tap position as its center. In Fig. 3, although circles 132 having the tap position as their centers are displayed as the predetermined mark, the mark may be other than the circles. Further, in Fig. 3, there is shown the case where the number of the circles 132 to be displayed is three, but the number of the predetermined marks to be displayed is not limited to three.

Further, as shown in Fig. 3, when the user performs the flick operation or the swipe operation to the touch panel, for example, the remote commander 100 can detect the direction in which the operating object 300 moves while being in contact with the touch panel as a movement direction, and can display a screen 131b including the predetermined mark indicating the movement direction. In Fig. 3, although arrows 133 pointing the movement direction from the vicinity of the center of the screen 131 are displayed as the predetermined mark, the mark may be other than the arrows. Further, in Fig. 3, there is shown the case where the number of the arrows 133 to be displayed is three, but the number of the predetermined marks to be displayed is not limited to three. The arrow 133 may be displayed in a manner that a position other than the vicinity of the center of the screen 131 is the reference point. The number and the size of the arrows 133 may be changed in accordance with the movement speed of the operating object 300.

In this way, the remote commander 100 is capable of displaying the operation information input by the user. Accordingly, the user can confirm whether the user could accurately input a desired operation as the operation information to the remote commander 100. In particular, it requires time for an unskilled touch panel user to get used to the operation on the touch panel, and it is particularly likely that the user makes an erroneous operation in the case of performing the flick operation, the swipe operation, the drag operation, and the like. Therefore, in the case where the user performs an operation on the touch panel provided to the remote commander 100, the operation information input by the user is displayed on the remote commander 100, thereby causing the user to learn the operation to be performed on the touch panel.

### [1-4. Functional configuration of remote commander]

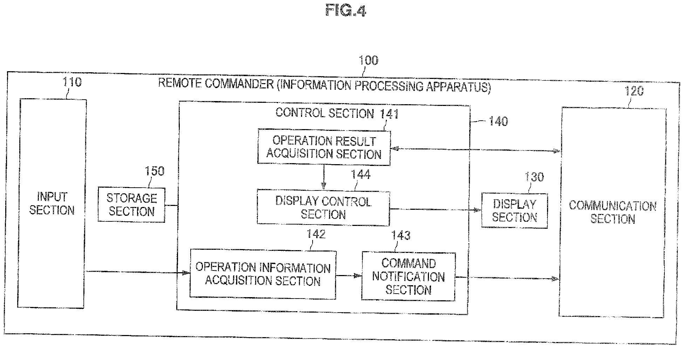

Fig. 4 is a diagram showing a functional configuration of a remote commander according to an embodiment of the present invention. With reference to Fig. 4, there will be described the functional configuration of the remote commander according to the embodiment.

As shown in Fig. 4, the remote commander 100 includes an input section 110, a communication section 120, a display section 130, a control section 140, and a storage section 150.

The input section 110 has a function of accepting input of operation information from the user. The input section 110 is configured from an input device, for example, and as the input section 110, there can be used a touch panel, a keyboard, a mouse, a button, and the like. However, in the present embodiment, the description will be made of the case where the touch panel is used as the input section 110 in particular.

The communication section 120 has a function of communicating with the control target device 200 via a wireless signal. The communication section 120 is configured from a communication device, for example. As a communication system used for communicating with the control target device 200 via a wireless signal, there can be used an infrared communication system, a radio wave communication system, a communication system through the Internet, and the like. That is, the communication system used for communicating with the control target device 200 via the wireless signal is not particularly limited.

The display section 130 has a function of displaying information output from the control section 140. The display section 130 is configured from a display device, for example, and as the display section 130, there can be used a CRT (Cathode Ray Tube), an LCD (Liquid Crystal Display), a PDP (Plasma Display Panel), an ELD (Electro-Luminescence Display), and the like.

The control section 140 has a function of controlling operation of the remote commander 100. The control section 140 is configured from a CPU (Central Processing Unit) and a RAM (Random Access Memory), for example, and the function of the control section 140 can be realized by the CPU developing in the RAM a program stored in the storage section 150, and the CPU executing the program developed in the RAM. The control section 140 includes an operation result acquisition section 141, an operation information acquisition section 142, a command notification section 143, and a display control section 144.

The operation information acquisition section 142 has a function of acquiring operation information through the input section 110. The operation information acquired by the operation information acquisition section 142 is output to the display control section 144. The operation information acquisition section 142, in the case where the input section 110 is configured by a touch panel, the operation information acquisition section 142 acquires, as a movement operation, information indicating the drag operation or the flick operation performed by the user. The operation information acquisition section 142 can also acquire, as the movement operation, information indicating the swipe operation performed by the user. The operation information acquisition section 142 may acquire, as a decision operation, information indicating the tap operation performed by the user.

The command notification section 143 has a function of creating a command for providing a notification to the control target device 200 based on the operation information acquired by the operation information acquisition section 142, and notifying the control target device 200 of the created notification command through the communication section 120. For example, in the case where the operation information acquired by the operation information acquisition section 142 is information indicating a movement operation, the command notification section 143 notifies the control target device 200 of the movement command including movement direction information indicating a direction specified by the movement operation, as the notification command.

The command notification section 143 may approximate the direction specified by the movement operation to any one of one or multiple predetermined directions, and may notify the control target device 200 of information indicating the approximated predetermined direction, the information being included in the movement command as the movement direction information. The predetermined direction is not particularly limited, and examples thereof include two directions of up and down, two directions of left and right, four directions of up, down, left, and the right.

In the case where the operation information acquired by the operation information acquisition section 142 is information indicating a movement start operation, the command notification section 143 may notify the control target device 200 of a movement start commands including movement start direction information indicating the direction specified by the movement start operation, as the notification command. The movement start operation is detected at the start of the swipe operation, for example.

In the case where the operation information acquired by the operation information acquisition section 142 is information indicating a movement continuation operation, the command notification section 143 may notify the control target device 200 of a movement continuation command as the notification command. The movement continuation operation is detected during continuation of the swipe operation, for example.

In the case where the operation information acquired by the operation information acquisition section 142 is information indicating a movement end operation, the command notification section 143 may notify the control target device 200 of a movement end command as the notification command. The movement end operation is detected at the end of the swipe operation, for example.

In the case where the operation information acquired by the operation information acquisition section 142 is information indicating the decision operation, the command notification section 143 may notify the control target device 200 of a decision command as the notification command.

The operation result acquisition section 141 has a function of acquiring a result obtained by execution of processing performed by the control target device 200 in accordance with the notification command, as an operation result from the control target device 200 through the communication section 120.

Since there are assumed various types of processing as the processing executed by the control target device 200, the processing executed by the control target device 200 is not particularly limited. For example, in the case where the control target device 200 is a display device, the processing executed by the control target device 200 may be processing of moving a focus between objects, processing of playing back and displaying content decided by the decision command transmitted from the remote commander 100, and the like. Further, for example, in the case where the control target device 200 is a recording device, the processing executed by the control target device 200 may be processing of recording and processing of making a recording reservation of content decided by the decision command transmitted from the remote commander 100, and the like. For example, in the case where the control target device 200 is an audio output device, the processing executed by the control target device 200 may be processing of changing the volume of sound to be output.

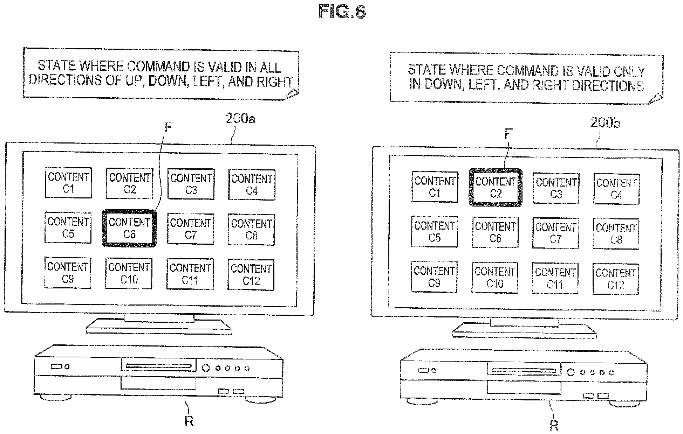

In the case where the command notification section 143 notifies the control target device 200 of a movement command, the operation result acquisition section 141 acquires a result obtained by execution of processing of moving a predetermined object performed by the control target device 200 based on the movement direction information included in the movement command, as the operation result from the control target device 200 through the communication section 120. The predetermined object is not particularly limited, and it is assumed that a focus F (refer to Fig. 6) or the like for selecting content is used as the predetermined object, for example. The focus F is displayed in the control target device 200.

The operation result acquisition section 141 can acquire, for example, valid direction information, which indicates a direction in which the predetermined object can be further moved after the execution of processing of moving the predetermined object performed by the control target device 200, as the operation result from the control target device 200 through the communication section 120. For example, when the processing of moving the focus F is executed, as the operation result, the valid direction information indicating the direction in which the focus F can be moved next can be acquired as the operation result from the control target device 200.

The operation result acquisition section 141 can also acquire a result as the operation result from the control target device 200 through the communication section 120, the result being obtained by starting the processing of moving the predetermined object by the control target device 200 in the direction indicated by the movement start direction information included in the movement start command, executing the processing of continuously moving the predetermined object by the control target device 200 in the direction indicated by the movement start direction information based on the movement continuation command, and terminating the processing of moving the predetermined object by the control target device 200 based on the movement end command.

The operation result acquisition section 141 can also acquire, as the operation result from the control target device 200 through the communication section 120, valid direction information indicating the direction in which the predetermined object can be further moved after the execution of processing of continuously moving the predetermined object performed by the control target device 200.

The operation result acquisition section 141 may acquire, as the operation result from the control target device 200 through the communication section 120, information indicating whether predetermined processing, which is executed by the control target device 200 based on the decision command, is performed normally. As the predetermined processing, there are assumed, as described above, the processing of playing back and displaying content and the processing of recording content, for example. As the information indicating whether the predetermined processing is performed normally, there are assumed information indicating whether the playback of content is performed normally, information indicating whether the recording of content is performed normally, and information indicating whether a recording reservation is made normally, for example.

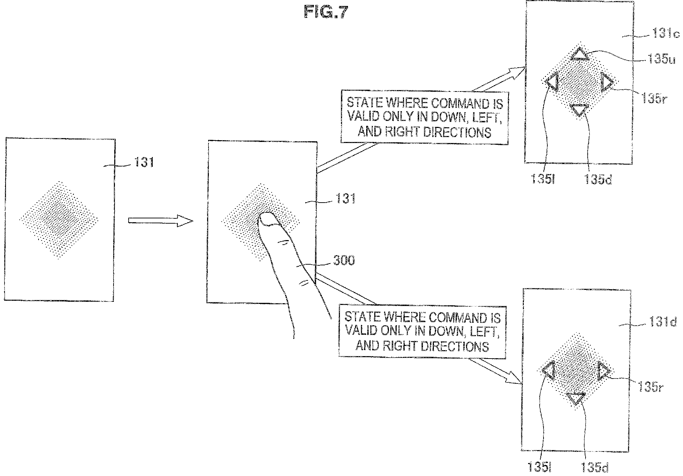

The display control section 144 has a function of causing the display section 130 to display the operation result acquired by the operation result acquisition section 141. The display examples of the operation result will be described later with reference to Fig. 7. The display control section 144 may cause the display section 130 to further display the operation information acquired by the operation information acquisition section 142. The display examples of the operation information are as described with reference to Fig. 3.

The storage section 150 has a function of storing data and a program used by the control section 140. The storage section 150 is configured from an HDD (Hard Disk Drive) and a semiconductor memory, for example.

According to the configuration described above, it becomes possible for the user to perform confirmation of an operation result, which is the result of processing executed by the control target device 200 in accordance with the command created based on the operation information input to the remote commander 100, while viewing the remote commander 100 in his/her hand.

### [1-5. Functional configuration of control target device]

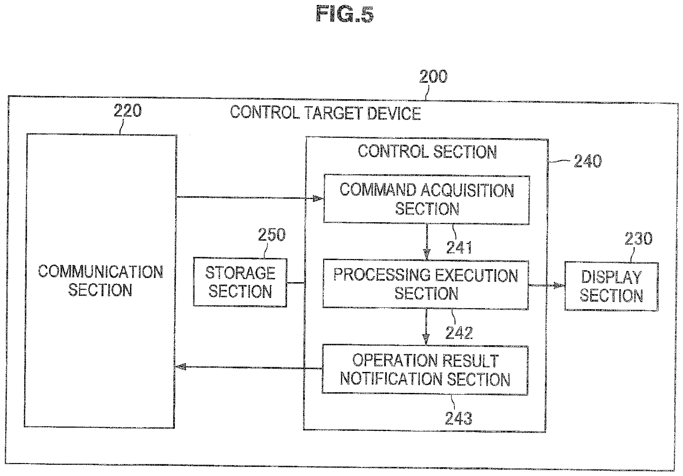

Fig. 5 is a diagram showing a functional configuration of a control target device according to an embodiment of the present invention. With reference to Fig. 5, there will be described the functional configuration of the control target device according to the embodiment.

As shown in Fig. 5, the control target device 200 includes a communication section 220, a display section 230, a control section 240, and a storage section 250.

The communication section 220 has a function of communicating with the remote commander 100 via a wireless signal. The communication section 220 is configured from a communication device, for example. The communication system used for communicating with the remote commander 100 via a wireless signal is not particularly limited as described above.

The display section 230 has a function of displaying information output from the control section 240. The display section 230 is configured from a display device, for example, and as the display section 230, there can be used a CRT, an LCD, a PDP, and an ELD, and the like.

The control section 240 has a function of controlling operation of the remote commander 100. The control section 240 is configured from a CPU and a RAM, for example, and the function of the control section 240 can be realized by the CPU developing in the RAM a program stored in the storage section 250, and the CPU executing the program developed in the RAM. The control section 240 includes a command acquisition section 241, a processing execution section 242, and an operation result notification section 243.

The command acquisition section 241 has a function of acquiring a notification command from the remote commander 100 through the communication section 120. The notification command corresponds to, in the examples described above, the commands such as the decision command, the movement command, the movement start command, the movement continuation command, and the movement end command.

The processing execution section 242 has a function of executing processing in accordance with the notification command acquired by the command acquisition section 241. As described above, since there are assumed various types of processing as the processing executed by the control target device 200, the processing executed by the control target device 200 is not particularly limited.

The operation result notification section 243 has a function of notifying the remote commander 100 of a result obtained by execution of the processing performed by the processing execution section 242 as the operation result through the communication section 220.

The storage section 250 has a function of storing data and a program used by the control section 240. The storage section 250 is configured from an HDD (Hard Disk Drive) and a semiconductor memory, for example.

### [1-6. Example of focus displayed by control target device]

Fig. 6 is a diagram showing an example of a focus displayed by the control target device when a direction (valid direction) in which a focus can be moved is used as the operation result. With reference to Fig. 6, there will be described an example of a focus displayed by the control target device when a direction (valid direction) in which a focus can be moved is used as the operation result.

As shown in Fig. 6, for example, the control target device 200 may have a function of displaying a screen for allowing a user to select desired content from among the pieces of content C1 to content C12. As described above, when the command acquisition section 241 of the control target device 200 acquires a command through the communication section 220, the processing execution section 242 performs processing in accordance with the command acquired by the command acquisition section 241, and the operation result notification section 243 notifies the remote commander 100 of a result of the processing as the operation result.

For example, when the command acquisition section 241 acquires the movement command from the remote commander 100 through the communication section 220, the processing execution section 242 performs the processing of moving the focus F in accordance with the movement command. Next, the operation result notification section 243 notifies the remote commander 100 of the direction (valid direction) in which the focus F can be moved next as the operation result through the communication section 220.

In Fig. 6, there is displayed a screen in a state where the focus F is set to the content C6 on a control target device 200a, and in this state, the user can perform a movement operation to the remote commander 100 in all directions of up, down, left, and right. When the user performs the flick operation in the upward direction to the remote commander 100, the command acquisition section 241 of the control target device 200 acquires the movement command indicating that upward movement is to be made through the communication section 220.

The processing execution section 242 moves the focus F upward in accordance with the movement command, and sets the focus F to the content C2. In a control target device 200b, a screen in a state where the focus F is set to the content C2 is displayed. In this state, a movement operation in down, left, and right directions can be performed. Accordingly, the operation result notification section 243 performs the notification of information indicating down, left, and right directions as the operation result obtained as a result of performing by the processing execution section 242 the movement processing of the focus F, through the communication section 220.

When the operation result acquisition section 141 of the remote commander 100 acquires the operation result through the communication section 120, the display control section 144 causes the display section 130 to display the information (information indicating down, left, and right directions) indicating the valid direction as the operation result. In this way, the user can grasp the direction in which the focus F can be moved next, while viewing the remote commander 100 in his/her hand. The display examples of the operation results will be described later with reference to Fig. 7.

Note that, although there has been described the example of moving the focus F by the flick operation here, the focus F can also be moved by the swipe operation and the drag operation. For example, in the case of moving the focus F by the swipe operation, the focus F can be moved successively. Further, the speed at which the focus F is moved can be also decided in accordance with the speed of the input using the operating object 300 to the touch panel by the flick operation, the swipe operation, and the drag operation.

For example, let us assume that the command acquisition section 241 acquires the decision command in the state where the focus F is set to the content C2, from the remote commander 100 through the communication section 220. In this case, the processing execution section 242 can execute the processing of processing to the content C2 to which the focus F is set, in accordance with the decision command. For example, the content C2 to which the focus F is set can be played back and can be caused to be displayed on the display section 130. The pieces of content C1 to C12 to be played back can be stored in the storage section 150, for example, and can also be acquired from a content providing server.

Note that information for identifying the content to which the focus F is set can be managed by the processing execution section 242, for example, and each time the position of the focus F is moved, the information for identifying the content to which the focus F is set can be updated by the processing execution section 242.

### [1-7. Example of operation result displayed by remote commander]

Fig. 7 is a diagram showing an example of an operation result displayed by the remote commander when the direction (valid direction) in which the focus can be moved is used as the operation result. With reference to Fig. 7, there will be described an example of an operation result displayed by the remote commander when the direction (valid direction) in which the focus can be moved is used as the operation result.

As described in Fig. 6, for example, in the case where the focus F is set to the content C6, since it is in the state in which the movement commands in all directions of up, down, left, and right are valid, the operation result acquisition section 141 of the remote commander 100 acquires the information indicating all directions of up, down, left, and right from the control target device 200. In this case, the display control section 144 causes the display section 130 to display a screen 131c including an up arrow 135u, a down arrow 135d, a left arrow 1351, and a right arrow 135r as the operation result, for example. The shape of the arrow is not particularly limited.

Further, as described in Fig. 6, for example, in the case where the focus F is set to the content C2, since it is in the state in which the movement commands in down, left, and right directions are valid, the operation result acquisition section 141 of the remote commander 100 acquires the information indicating down, left, and right directions from the control target device 200. In this case, the display control section 144 causes the display section 130 to display a screen 131d including the down arrow 135d, the left arrow 1351, and the right arrow 135r as the operation result, for example.

### [1-8. Processing executed by information processing system when performing flick operation]

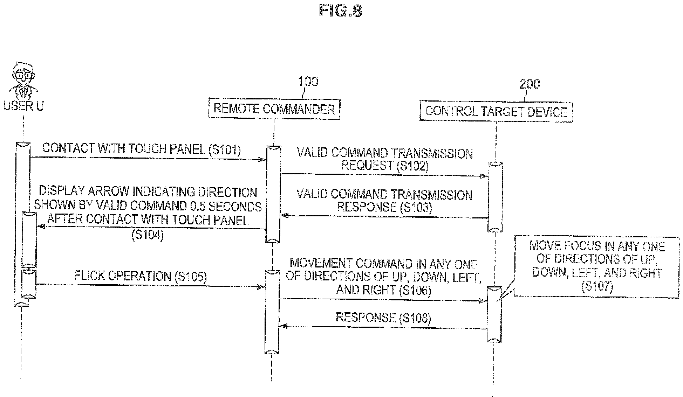

Fig. 8 is a sequence diagram showing a flow of processing executed by the information processing system when the focus is moved by a flick operation (in particular, when the remote commander inquires of the control target device about a valid command every time detecting a contact with a touch panel). With reference to Fig. 8, there will be described processing executed by the information processing system when the focus is moved by a flick operation (in particular, when the remote commander inquires of the control target device about a valid command every time detecting a contact with a touch panel).

As shown in Fig. 8, a user U touches the touch panel of the remote commander 100 (Step S101). When detecting that the user U touches the touch panel, the remote commander 100 transmits a valid command transmission request to the control target device 200 (Step S102). The valid command transmission request is for demanding the transmission of an operation result. Further, the operation result corresponds to the information indicating a valid direction in the example described above.

When receiving the valid command transmission request, the control target device 200 transmits a valid command transmission response including a valid command to the remote commander 100 (Step S103). The valid command corresponds to the valid direction in the example described above. The remote commander 100 displays an arrow indicating the direction shows by the valid command 0.5 seconds after the user U touches the touch panel (Step S104). Although the remote commander 100 displays the arrow indicating the direction shown by the valid command 0.5 seconds after the user U touches the touch panel here, the timing at which the arrow is displayed can be changed appropriately within the range that a great stress is not placed on the user U.

Next, the user U inputs the operation information to the remote commander 100 by the flick operation (Step S105). The remote commander 100 transmits the movement command in the direction indicated by the operation information input by the user by the flick operation to the control target device 200 (Step S106). The control target device 200 moves the focus F in any one of the directions of up, down, left, and right, in accordance with the movement command (Step S107). The control target device 200 transmits, to the remote commander 100, the information indicating the direction in which the focus F can be moved next as a response as the result of moving the focus F (Step S108).

### [1-9. Processing executed by information processing system when performing swipe operation]

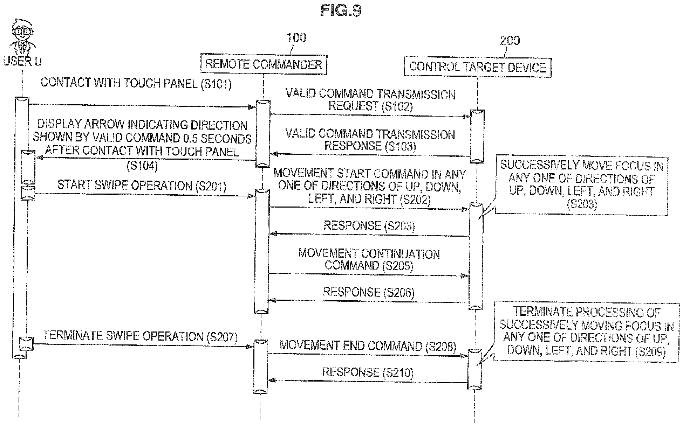

Fig. 9 is a sequence diagram showing a flow of processing executed by the information processing system when the focus is successively moved by a swipe operation. With reference to Fig. 9, there will be described processing executed by the information processing system when the focus is successively moved by a swipe operation.

Steps S101 to S104 shown in Fig. 9 are executed in the same manner as Steps S101 to S104 shown in Fig. 8.

After Step S104 is executed, the user U inputs a swipe start operation to the remote commander 100 (Step S201). The remote commander 100 transmits movement start command in the direction indicated by the operation information input by the user by the swipe start operation to the control target device 200 (Step S201). The control target device 200 successively moves the focus F in any one of the directions of up, down, left, and right, in accordance with the movement start command (Step S203). The control target device 200 transmits, to the remote commander 100, the information indicating the direction in which the focus F can be moved next as a response as the result of successively moving the focus F (Step S203).

Next, the user U inputs a swipe continuation operation to the remote commander 100. The remote commander 100 transmits the movement continuation command to the control target device 200 (Step S205). The control target device 200 successively moves the focus F in the direction in which the movement started a while before in accordance with the movement continuation command. The control target device 200 transmits, to the remote commander 100, the information indicating the direction in which the focus F can be moved next as a response as the result of successively moving the focus F (Step S206). It is assumed that the number of the swipe continuation operations performed by the user U is one or more.

Next, the user U inputs a swipe end operation to the remote commander 100 (Step S207). The remote commander 100 transmits the movement end command to the control target device 200 (Step S208). The control target device 200 terminates the processing of successively moving the focus F in any one of the directions of up, down, left, and right, in accordance with the movement end command. The control target device 200 transmits, to the remote commander 100, the information indicating the direction in which the focus F can be moved next as a response as the result of terminating the successive movement of the focus F (Step S210).

### [1-10. Processing executed by information processing system when performing flick operation (Part 1)]

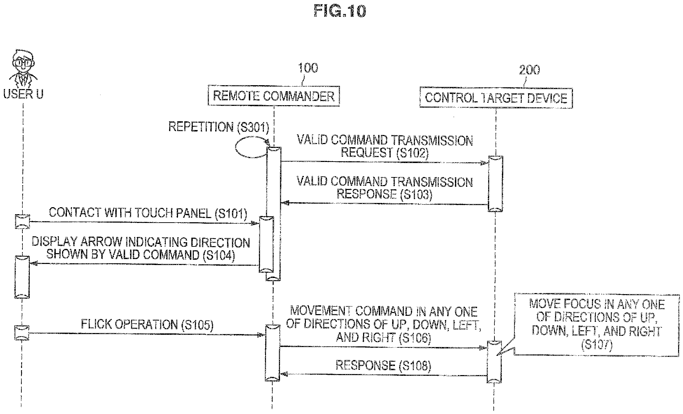

Fig. 10 is a sequence diagram showing a flow of processing executed by the information processing system when the focus is moved by a flick operation (in particular, when the remote commander inquires of the control target device about a valid command regularly). With reference to Fig. 10, there will be described processing executed by the information processing system when the focus is moved by a flick operation (in particular, when the remote commander inquires of the control target device about a valid command regularly).

As shown in Fig. 10, the remote commander 100 transmits a valid command transmission request to the control target device 200 (Step S102). When receiving the valid command transmission request, the control target device 200 transmits a valid command transmission response including a valid command to the remote commander 100 (Step S103). In the example shown in Fig. 10, Steps S102 to S103 are repeated regularly (Step S301). Further, in the example shown in Fig. 10, when Step S101 is performed while the repetition processing of Step S301 is being performed, Step S104 is performed. Steps S105 to S108 are executed in the same manner as Steps S105 to S108 shown in Fig. 8.

### [1-11. Processing executed by information processing system when performing flick operation (Part 2)]

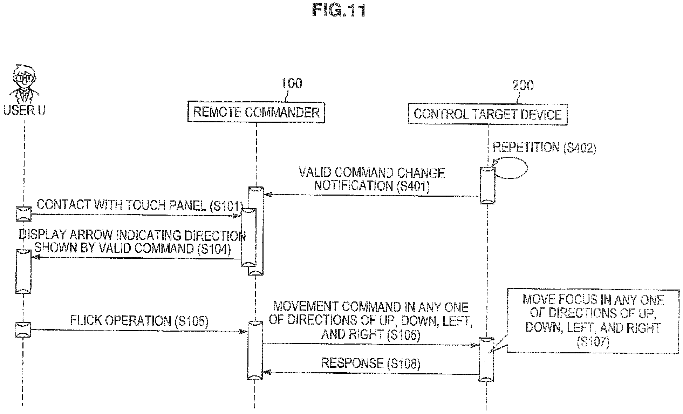

Fig. 11 is a sequence diagram showing a flow of processing (in particular, a changed valid command every time a valid command is changed) executed by the information processing system when the focus is moved by the flick operation. With reference to Fig. 11, there will be described processing (in particular, a changed valid command every time a valid command is changed) executed by the information processing system when the focus is moved by the flick operation.

As shown in Fig. 11, the control target device 200 may execute repeatedly the processing (Step S402) of transmitting valid command change notification to the remote commander 100 (Step S401) each time the valid command is changed. Steps S101 and S104 to S108 are executed in the same manner as Steps S101 and S104 to S108 shown in Fig. 8.

### [1-12. Processing executed by information processing system when performing flick operation (Part 3)]

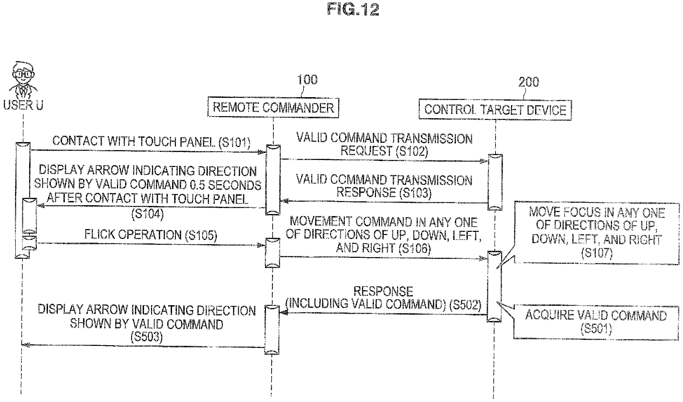

Fig. 12 is a sequence diagram showing a flow of processing executed by the information processing system when the focus is moved by the flick operation (in particular, when the valid command is included in a response to the flick operation). With reference to Fig. 12, there will be described processing executed by the information processing system when the focus is moved by the flick operation (in particular, when the valid command is included in a response to the flick operation).

As shown in Fig. 12, when receiving a movement command from the remote commander 100, the control target device 200 may acquire a valid command after moving the focus F (Step S501), and may include the acquired valid command in a response to the movement command (Step S502). When receiving the response to the movement command, the remote commander 100 displays an arrow indicating the direction shown by the valid command included in the response to the movement command (Step S503). Steps S101 to S107 are executed in the same manner as Steps S101 to S107 shown in Fig. 8.

### [1-13. Flow of processing executed by remote commander]

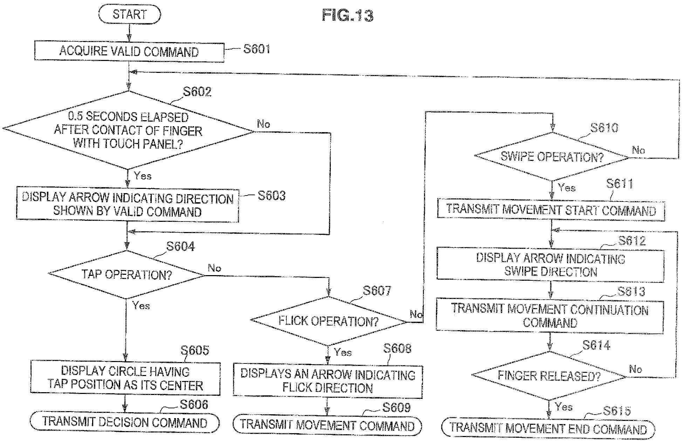

Fig. 13 is a flowchart showing a flow of processing executed by the remote commander according to an embodiment of the present invention. With reference to Fig. 13, there will be described processing executed by the remote commander according to the embodiment.

As shown in Fig. 13, the remote commander 100 acquires a valid command from the control target device 200 (Step S601). The remote commander 100 determines whether 0.5 seconds are elapsed, after the user U's finger touches the touch panel (Step S602). In the case of determining that 0.5 seconds are not elapsed after the user U's finger touches the touch panel ("No" in Step S602), the remote commander 100 proceeds to Step S604. In the case of determining that 0.5 seconds are elapsed after the user U's finger touches the touch panel ("Yes" in Step S602), the remote commander 100 displays an arrow indicating the direction shown by the valid command (Step S603), and proceeds to Step S604.

The remote commander 100 determines whether the operation performed by the user U is the tap operation (Step S604). In the case of determining that the operation performed by the user U is the tap operation ("Yes" in Step S604), the remote commander 100 displays a circle having the tap position as its center (Step S605), and transmits the decision command to the control target device 200 (Step S606). In the case of determining that the operation performed by the user U is not the tap operation ("No" in Step S604), the remote commander 100 determines whether the operation performed by the user U is the flick operation (Step S607).

In the case of determining that the operation performed by the user U is the flick operation ("Yes" in Step S607), the remote commander 100 displays an arrow indicating the flick direction (Step S608), and transmits the movement command to the control target device 200 (Step S609). In the case of determining that the operation performed by the user U is not the flick operation ("No" in Step S607), the remote commander 100 determines whether the operation performed by the user U is the swipe operation (Step S610).

In the case of determining that the operation performed by the user U is not the swipe operation ("No" in Step S610), the remote commander 100 returns to Step S602. In the case of determining that the operation performed by the user U is the swipe operation ("yeas" in Step S610), the remote commander 100 transmits the movement start command to the control target device 200 (Step S611), and displays an arrow indicating the swipe direction (Step S612). Next, the remote commander 100 transmits the movement continuation command to the control target device 200 (Step S613), and determines whether the user U releases his/her finger from the touch panel (Step S614).

In the case of determining that the user U does not release his/her finger from the touch panel ("No" in Step S614), the remote commander 100 returns to Step S612. In the case of determining that the user U releases his/her finger from the touch panel ("yeas" in Step S614), the remote commander 100 transmits the movement end command to the control target device 200 (Step S615). In Fig. 13, the processing is terminated when the user U releases his/her finger from the touch panel, but even after the termination, the processing may return to Step S601 and may be continued as well.

### <2. Modified example>

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

For example, it is not necessary that the information processing system according to the embodiments of the present invention execute the processing in the order shown in the flowcharts, and the order of the processing may be appropriately changed. Further, the information processing system according to the embodiments of the present invention may execute the processing shown in the flowcharts once, or may execute the processing multiple times repeatedly.

### <3. Conclusion>

According to the present embodiment, it becomes possible for the user to perform confirmation of an operation result, which is the result of processing executed by the control target device 200 in accordance with the command created based on the operation information input to the remote commander 100, while viewing the remote commander 100 in his/her hand. There can be assumed various operation results, and an example thereof includes, as described in the present embodiment, the direction that the user can input to the remote commander 100.

Further, the remote commander 100 can display the operation information input by the user. Accordingly, the user can confirm whether the user could accurately input a desired operation as the operation information to the remote commander 100. In addition, as described in the present embodiment, in the case where the user performs an operation on the touch panel provided to the remote commander 100, the operation information input by the user is displayed on the remote commander 100, thereby causing the user to learn the operation to be performed on the touch panel.

### Reference Signs List

- 10: Information processing system
- 100: Remote commander (Information processing apparatus)
- 110: Input section
- 120: Communication section
- 130: Display section
- 140: Control section
- 141: Operation result acquisition section
- 142: Operation information acquisition section
- 143: Command notification section
- 144: Display control section
- 150: Storage section
- 200: Control target device
- 220: Communication section
- 230: Display section
- 240: Control section
- 241: Command acquisition section
- 242: Processing execution section
- 243: Operation result notification section
- 250: Storage section

## Claims

1. An information processing apparatus (100) comprising:
an input section (110) which accepts input of operation information;
a communication section (120) which communicates with a control target device (200) via a wireless signal;
a display section (130);
an operation information acquisition section (142) which acquires the operation information through the input section;
a command notification section (143) which creates a notification command based on the operation information acquired by the operation information acquisition section, and notifies the control target device of the created notification command through the communication section;
an operation result acquisition section (141) which acquires a result obtained by execution of processing performed by the control target device in accordance with the notification command, as an operation result from the control target device through the communication section; and
a display control section (144) which causes the display section to display the operation result acquired by the operation result acquisition section,
**characterised in that**, in a case where the operation information acquired by the operation information acquisition section is information indicating a movement operation, the command notification section notifies the control target device of a movement command including movement direction information indicating a direction specified by the movement operation, as the notification command and the operation result acquisition section acquires a result obtained by execution of processing of moving a predetermined object performed by the control target device based on the movement direction information included in the movement command, as the operation result from the control target device through the communication section and acquires valid direction information, which indicates a direction in which the predetermined object can be further moved after execution of processing of moving the predetermined object performed by the control target device, as the operation result from the control target device through the communication section.

2. The information processing apparatus according to claim 1,
wherein the input section is configured from a touch panel, and
wherein the operation information acquisition section acquires, as the movement operation, information indicating a drag operation or a flick operation performed by a user, and optionally
wherein the command notification section approximates the direction specified by the movement operation to any one of one or a plurality of predetermined directions, and notifies the control target device of information indicating the approximated predetermined direction, the information being included in the movement command as the movement direction information.

3. The information processing apparatus according to claim 1,
wherein, in a case where the operation information acquired by the operation information acquisition section is information indicating a movement start operation, the command notification section notifies the control target device of a movement start command including movement start direction information indicating a direction specified by the movement start operation, as the notification command, in a case where the operation information acquired by the operation information acquisition section is information indicating a movement continuation operation, the command notification section notifies the control target device of a movement continuation command as the notification command, and in a case where the operation information acquired by the operation information acquisition section is information indicating a movement end operation, the command notification section notifies the control target device of a movement end command as the notification command.

4. The information processing apparatus according to claim 3.
wherein the operation result acquisition section acquires a result as the operation result from the control target device through the communication section, the result being obtained by starting processing of moving a predetermined object by the control target device in a direction indicated by the movement start direction information included in the movement start command, executing processing of continuously moving the predetermined object by the control target device in a direction indicated by the movement start direction information based on the movement continuation command, and terminating processing of moving the predetermined object by the control target device based on the movement end command, and optionally.
wherein the operation result acquisition section acquires, as the operation result from the control target device through the communication section, valid direction information indicating a direction in which the predetermined object can be further moved after execution of processing of continuously moving the predetermined object performed by the control target device.

5. The information processing apparatus according to claim 3,
wherein the input section is configured from a touch panel, and
wherein the operation information acquisition section acquires, as the movement operation, information indicating a swipe operation performed by a user.

6. The information processing apparatus according to claim 1,
wherein, in a case where the operation information acquired by the operation information acquisition section is information indicating a decision operation, the command notification section notifies the control target device of a decision command as the notification command.

7. The information processing apparatus according to claim 6,
wherein the input section is configured from a touch panel, and
wherein the operation information acquisition section acquires, as the decision operation, information indicating a tap operation performed by a user.

8. The information processing apparatus according to claim 6,
wherein the operation result acquisition section acquires, as the operation result from the control target device through the communication section, information indicating whether predetermined processing, which is executed by the control target device based on the decision command, is performed normally.

9. The information processing apparatus according to claim 1,
wherein the display control section causes the display section to further display the operation information acquired by the operation information acquisition section.

10. An information processing method performed by an information processing apparatus (100) including an input section (110) which accepts input of operation information, a communication section (120) which communicates with a control target device via a wireless signal, a display section (130), an operation information acquisition section (142), a command notification section (143), an operation result acquisition section (141), and a display control section (144), comprising:
a step of acquiring, by the operation information acquisition section, the operation information through the input section;
a step of creating, by the command notification section, a notification command based on the operation information acquired by the operation information acquisition section, and notifying, by the command notification section, the control target device of the created notification command through the communication section;
a step of acquiring, by the operation result acquisition section, a result obtained by execution of processing performed by the control target device in accordance with the notification command, as an operation result from the control target device through the communication section; and
a step of causing, by the display control section, the display section to display the operation result acquired by the operation result acquisition section,
**characterised in that** the operation information acquired by the operation information acquisition section is information indicating a movement operation and the command notification section notifies the control target device of a movement command including movement direction information indicating a direction specified by the movement operation, as the notification command and the operation result acquisition section acquires a result obtained by execution of processing of moving a predetermined object performed by the control target device based on the movement direction information included in the movement command, as the operation result from the control target device through the communication section and acquires valid direction information, which indicates a direction in which the predetermined object can be further moved after execution of processing of moving the predetermined object performed by the control target device, as the operation result from the control target device through the communication section.

11. A program for causing a computer to perform the method of claim 10.

12. A control target device (200) comprising:
a communication section which communicates with an information processing apparatus (100) via a wireless signal;
a command acquisition section which acquires a notification command from the information processing apparatus through the communication section;
a processing execution section which executes processing in accordance with the notification command acquired by the command acquisition section; and
an operation result notification section which notifies the information processing apparatus of a result obtained by execution of the processing performed by the processing execution section as the operation result through the communication section
**characterised in that** the notification command acquired by the command acquisition section notifies the control target device of a movement command including movement direction information indicating a direction specified by the movement operation, wherein the operation result notified to the information processing apparatus by the operation result notification section is a result obtained by execution of processing of moving a predetermined object performed by the control target device based on the movement direction information included in the movement command, and wherein valid direction information notified to the information processing apparatus by the operation result notification section indicates a direction in which the predetermined object can be further moved after execution of processing of moving the predetermined object performed by the control target device.

13. An information processing system (10) comprising:
an information processing apparatus (100) according to claim 1: and
a control target device (200) according to claim 12.

## Patentansprüche

1. Informationsverarbeitungsvorrichtung (100) mit:
einer Eingabeeinheit (110), die die Eingabe von Bedieninformationen akzeptiert;
einer Kommunikationseinheit (120), die mit einem Steuerungszielgerät (200) über ein drahtloses Signal kommuniziert;
einer Anzeigeeinheit (130);
einer Bedieninformationserfassungseinheit (142), die die Bedieninformationen durch die Eingabeeinheit erfasst;
einer Befehlsbenachrichtigungseinheit (143), die einen Benachrichtigungsbefehl basierend auf der von der Bedieninformationserfassungseinheit erfassten Bedieninformation erzeugt und das Steuerungszielgerät über den erzeugten Benachrichtigungsbefehl durch die Kommunikationseinheit benachrichtigt;
einer Bedienergebniserfassungseinheit (141), die ein Ergebnis erfasst, das durch Ausführung der von dem Steuerungszielgerät in Übereinstimmung mit dem Benachrichtigungsbefehl durchgeführten Verarbeitung erhalten wurde, als ein Bedienergebnis von dem Steuerungszielgerät durch die Kommunikationseinheit; und
einer Anzeigesteuerungseinheit (144), die die Anzeigeeinheit veranlasst, das von der Bedienergebniserfassungseinheit erfasste Bedienergebnis anzuzeigen,
**dadurch gekennzeichnet, dass** für den Fall, dass die von der Bedieninformationserfassungseinheit erfasste Bedieninformation eine Information ist, die eine Bewegungsbedienung anzeigt, die Befehlsbenachrichtigungseinheit die Steuerungszieleinheit über einen Bewegungsbefehl benachrichtigt, der Bewegungsrichtungsinformationen enthält, die eine durch die Bewegungsbedienung spezifizierte Richtung anzeigen, als den Benachrichtigungsbefehl, und dass die Bedienungsergebniserfassungseinheit ein Ergebnis erfasst, das erhalten wurde durch Ausführung der Verarbeitung zum Bewegen eines vorbestimmten Objekts, die von dem Steuerungszielgerät durchgeführt wurde basierend auf der Bewegungsrichtungsinformation, die in dem Bewegungsbefehl enthalten ist, als das Bedienergebnis von dem Steuerungszielgerät durch die Kommunikationseinheit und eine gültige Richtungsinformation erfasst, die eine Richtung anzeigt, in die das vorbestimmte Objekt weiter bewegt werden kann nach Ausführung der Verarbeitung zum Bewegen des vorbestimmten Objekts, die von dem Steuerungszielgerät durchgeführt wurde, als das Bedienergebnis von dem Steuerungszielgerät durch die Kommunikationseinheit.

2. Informationsverarbeitungsvorrichtung gemäß Anspruch 1,
wobei die Eingabeeinheit als Bildschirm-Tastfeld ausgestaltet ist und
wobei die Bedieninformationserfassungseinheit als die Bewegungsbedienung eine Information erfasst, die eine von einem Benutzer durchgeführte Ziehbedienung oder eine Umblätterbedienung anzeigt, und optional,
wobei die Befehlsbenachrichtigungseinheit die von der Bewegungsbedienung spezifizierte Richtung an irgendeine von einer oder einer Vielzahl von vorbestimmten Richtungen annähert und das Steuerungszielgerät benachrichtigt über eine Information, die die angenäherte vorbestimmte Richtung anzeigt, wobei die Information in dem Bewegungsbefehl als die Beurregungsrichtungsinformation enthalten ist.

3. Informationsverarbeitungsvorrichtung gemäß Anspruch 1,
wobei für den Fall, dass die von der Bedieninformationserfassungseinheit erfasste Bedieninformation eine Information ist, die eine Bewegungsstartbedienung anzeigt, die Befehlsbenachrichtigungseinheit das Steuerungszielgerät benachrichtigt über einen Bewegungsstartbefehl, der eine Bewegungsstartrichtungsinformation enthält, die eine von dem Bewegungsstartbefehl spezifizierte Richtung anzeigt, als den Benachrichtigungsbefehl, wobei für den Fall, in dem die von der Bedieninformationserfassungseinheit erfasste Bedieninformation eine Information ist, die eine Bewegungsfortsetzungsbedienung anzeigt, die Befehlsbenachrichtigungseinheit das Zielsteuerungsgerät benachrichtigt über einen Bewegungsfortsetzungsbefehl als den Benachrichtigungsbefehl, und wobei für den Fall, dass die von der Bewegungsinformationserfassungseinheit erfasste Bedieninformation eine Information ist, die eine Bewegungsendoperation anzeigt, die Befehlsbenachrichtigungseinheit das Zielsteuerungsgerät benachrichtigt über einen Bewegungsendbefehl als den Benachrichtigungsbefehl.

4. Informationsverarbeitungsvorrichtung gemäß Anspruch 3,
wobei die Bedienergebniserfassungseinheit ein Ergebnis erfasst als das Bedienergebnis von dem Zielsteuerungsgerät durch die Kommunikationseinheit, wobei das Ergebnis erhalten wurde durch Start der Verarbeitung des Bewegens eines vorbestimmten Objekts durch das Zielsteuerungsgerät in einer von der Bewegungsstartrichtungsinformation, die in dem Bewegungsstartbefiehl enthalten ist, angezeigten Richtung, durch Ausführen der Verarbeitung des kontinuierlichen Bewegens des vorbestimmten Objekts durch das Zielsteuerungsgerät in einer von der Bewegungsstartrichtungsinformation angezeigten Richtung basierend auf dem Bewegungsfortsetzungsbefehl, und durch Beenden der Verarbeitung des Bewegens des vorbestimmten Objekts durch das Zielsteuerungsgerät basierend auf dem Berruegungsendbefiehl, und optional,
wobei die Bewegungsergebniserfassungseinheit als das Bedienergebnis von dem Zielsteuerungsgerät durch die Kammunikationseinheit gültige Richtungsinformation erfasst, die eine Richtung anzeigt, in die das vorbestimmte Objekt weiter bewegt werden kann nach Ausführung der Verarbeitung des kontinuierlichen Bewegens des vorbestimmten Objekts, was von dem Zielsteuerungsgerät durchgeführt wird.

5. Informationsverarbeitungsvorrichtung gemäß Anspruch 3,
wobei die Eingabeeinheit als Bildschirm-Tastfeld ausgestaltet ist, und
wobei die Bedieninfiormationserfassungseinheit als die Bewegungsbedienung eine Information erfasst, die eine von einem Benutzer durchgeführte Wischbedienung anzeigt.

6. Informationsverarbeitungsvorrichtung gemäß Anspruch 1,
wobei für den Fall, dass die von der Bedieninfiormationserfassungseinheit erfasste Bedieninformation eine Information ist, die eine Entscheidungsbedienung ist, die Befehlsbenachrichtigungseinheit die Zielsteuerungseinheit über einen Entscheidungsbefehl als den Benachrichtigungsbefehl benachrichtigt.

7. Informationsverarbeitungsvorrichtung gemäß Anspruch 6,
wobei die Eingabeeinheit als Bildschirm-Tastfeld ausgestaltet ist, und
wobei die Bedieninfiormationserfassungseinheit als die Entscheidungsbedienung eine Information erfasst, die eine von einem Benutzer durchgeführte Klopfbedienung anzeigt.

8. Informationsverarbeitungsvorrichtung gemäß Anspruch 6,
wobei die Bedienergebniserfassungseinheit als das Bedienergebnis von dem Steuerungszielgerät durch die Kommunikationseinheit eine Information erfasst, die anzeigt, ob eine vorbestimmte Verarbeitung, die von dem Steuerungszielgerät basierend auf dem Entscheidungsbefehl ausgeführt wird, normal durchgeführt wird.

9. Informationsverarbeitungsvorrichtung gemäß Anspruch 1,
wobei die Bildschirmsteuerungseinheit die Anzeigeeinheit veranlasst, ferner die von der Bedieninformationserfassungseinheit erfasste Bedieninformation anzuzeigen.

10. Informationsverarbeitungsverfahren, das von einer Informationsverarbeitungsvorrichtung (100) durchgeführt wird, umfassend eine Eingabeeinheit (110), die Eingabe von Bedieninformationen akzeptiert, eine Kommunikationseinheit (120), die mit einem Steuerungszielgerät über ein drahtloses Signal kommuniziert, eine Anzeigeeinheit (130), eine Bedieninformationserfassungseinheit (142), eine Befehlsbenachrichtigungseinheit (143), eine Bedienergebniserfassungseinheit (141) und eine Anzeigesteuereinheit (144), mit:
einem Schritt zum Erfassen, durch die Bedieninformationserfassungseinheit, der Bedieninformationen durch die Eingabeeinheit;
einem Schritt zum Erzeugen, durch die Befehlsbenachrichtigungseinheit, eines Benachrichtigungsbefehls basierend auf der von der Bedieninformationserfassungseinheit erfassten Bedieninformation und zum Benachrichtigen, durch die Befehlsbenachrichtigungseinheit, des Steuerungszielgeräts über den erzeugten Benachrichtigungsbefehl durch die Kommunikaüonseinheit;
einem Schritt zum Erfassen, durch die Bedienergebniserfassungseinheit, des Ergebnisses, das durch Ausführung der von dem Steuerungszielgerät in Übereinstimmung mit dem Benachrichtigungsbefehl durchgeführten Verarbeitung erhalten wurde, als ein Bedienergebnis von dem Steuerungszielgerät durch die Kommunikationseinheit; und
einem Schritt, zum Veranlassen durch die Anzeigesteuerungseinheit, der Anzeigeeinheit, das von der Bedienergebniserfassungseinheit erfasste Bedienergebnis anzuzeigen,
**dadurch gekennzeichnet, dass** die von der Bedieninformationserfassungseinheit erfasste Bedieninformation eine Information ist, die eine Bewegungsbedienung anzeigt, und die Befehlsbenachrichtigungseinheit die Steuerungszieleinheit über einen Bewegungsbefehl benachrichtigt, der Bewegungsrichtungsinformationen enthält, die eine durch die Bewegungsbedienung spezifizierte Richtung anzeigen, als den Benachrichtigungsbefehl und dass die Bedienungsergebniserfassungseinheit ein Ergebnis erfasst, das erhalten wurde durch Ausführung der Verarbeitung zum Bewegen eines vorbestimmten Objekts, die von dem Steuerungszielgerät durchgeführt wurde basierend auf der Bewegungsrichtungsinformation, die in dem Bewegungsbefehl enthalten ist, als das Bedienergebnis von dem Steuerungszielgerät durch die Kommunikationseinheit und eine gültige Richtungsinformation erfasst, die eine Richtung anzeigt, in die das vorbestimmte Objekt weiter bewegt werden kann nach Ausführung der Verarbeitung zum Bewegen des vorbestimmten Objekts, die von dem Steuerungszielgerät durchgeführt wurde, als das Bedienergebnis von dem Steuerungszielgerät durch die Kommunikationseinheit.

11. Programm zur Verursachung eines Computers, das Verfahren von Anspruch 10 durchzuführen.

12. Steuerungszielgerät (200) mit:
einer Kommunikationseinheit, die mit einer Informationsverarbeitungsvorrichtung (100) über ein drahtloses Signal kommuniziert;
eine Befehlserfassungseinheit, die einen Benachrichtigungsbefehl von der Informationsverarbeitungsvorrichtung durch die Kommunikationseinheit erfasst;
eine Verarbeitungsausführungseinheit, die eine Verarbeitung gemäß dem von der Befehlserfassungseinheit erfassten Benachrichtigungsbefehl ausführt; und
eine Bedienergebnisbenachrichtigungseinheit, die die Informationsverarbeitungsvorrichtung benachrichtigt über ein Ergebnis, das erhalten wurde durch Ausführung der von der Verarbeitungsausführungseinheit durchgeführten Verarbeitung, als das Bedienergebnis durch die Kommunikationseinheit,
**dadurch gekennzeichnet, dass** der von der Befehlserfassungseinheit erfasste Benachrichtigungsbefehl das Steuerungszielgerät benachrichtigt über einen Bewegungsbefehl der Bewegungsrichtungsinformationen enthält, die eine durch die Bewegungsbedienung spezifizierte Richtung anzeigen, wobei das an die Informationsverarbeitungsvorrichtung benachrichtigte Bedienergebnis von der Bedienergebnisbenachrichtigungseinheit ein Ergebnis ist, das erhalten wurde durch Ausführung der Verarbeitung zum Bewegen eines vorbestimmten Objekts, die von der Zielstörungsvorrichtung durchgeführt wurde basierend auf der Bewegungsrichtungsinformation, die in dem Bewegungsbefehl enthalten ist, und wobei eine gültige Richtungsinformation, die der Informationsverarbeitungsvorrichtung benachrichtigt wurde von der Bedienergebnisbenachrichtigungseinheit, eine Richtung anzeigt, in die das vorbestimmte Objekt weiter bewegt werden kann nach Ausführung der Verarbeitung zum Bewegen des vorbestimmten Objekts, die von dem Steuerungszielgerät durchgeführt wird.

13. Informationsverarbeitungssystem (10) mit:
einer Informationsverarbeitungsvorrichtung (100) gemäß Anspruch 1; und
einem Steuerungszielgerät (200) gemäß Anspruch 12.

## Revendications

1. Appareil (100) de traitement d'informations camportant :
une section (110) d'entrée qui admet une entrée d'informations d'opération ;
une section (120) de communication qui communique avec un dispositif cible (200) de commande via un signal sans fil ;
une section (130) d'affichage ;
une section (142) d'acquisition d'informations d'opération qui acquiert les informations d'opération par l'intermédiaire de la section d'entrée ;
une section (143) de notification de consignes qui crée une consigne de notification d'après les informations d'opération acquises par la section d'acquisition d'informations d'opération, et notifie au dispositif cible de commande la consigne de notification créée par l'intermédiaire de la section de communication ;
une section (141) d'acquisition de résultats d'opérations qui acquiert un résultat obtenu par l'exécution d'un traitement effectué par le dispositif cible de commande selon la consigne de notification, en tant que résultat d'opération en provenance du dispositif cible de commande par l'intermédiaire de la section de communication ; et
une section (144) de commande d'affichage qui fait en sorte que la section d'affichage affiche le résultat d'opération acquis par la section d'acquisition de résultats d'opérations,
**caractérisé en ce que**, dans un cas où les informations d'opération acquises par la section d'acquisition d'informations d'opération sont des informations indiquant une opération de mouvement, la section de notification de consignes notifie au dispositif cible de commande une consigne de mouvement comprenant des informations de direction de mouvement indiquant une direction spécifiée par l'opération de mouvement, en tant que consigne de notification et la section d'acquisition de résultats d'opérations acquiert un résultat obtenu par l'exécution d'un traitement de déplacement d'un objet prédéterminé effectué par le dispositif cible de commande d'après les informations de direction de mouvement comprises dans la consigne de mouvement, en tant que résultat d'opération en provenance du dispositif cible de commande par l'intermédiaire de la section de communication et acquiert des informations de direction valide, qui indiquent une direction dans laquelle l'objet prédéterminé peut être déplacé davantage après l'exécution du traitement de déplacement de l'objet prédéterminé effectué par le dispositif cible de commande, en tant que résultat d'opération en provenance du dispositif cible de commande par l'intermédiaire de la section de communication.

2. Appareil de traitement d'informations selon la revendication 1, la section d'entrée étant constituée d'un panneau tactile, et la section d'acquisition d'informations d'opération acquérant, en tant qu'opération de mouvement, des informations indiquant une opération de glissement ou une opération de retournement effectuée par un utilisateur, et la section de notification de consignes approximant éventuellement la direction spécifiée par l'opération de mouvement par une direction quelconque parmi une ou plusieurs directions prédéterminées, et notifiant au dispositif cible de commande des informations indiquant la direction prédéterminée approximée, les informations étant comprises dans la consigne de mouvement en tant qu'informations de direction de mouvement.

3. Appareil de traitement d'informations selon la revendication 1, **caractérisé en ce que**, dans un cas où les informations d'opération acquises par la section d'acquisition d'informations d'opération sont des informations indiquant une opération de début de mouvement, la section de notification de consignes notifie au dispositif cible de commande une consigne de début de mouvement comprenant des informations de direction de début de mouvement indiquant une direction spécifiée par l'opération de début de mouvement, en tant que consigne de notification, **en ce que**, dans un cas où les informations d'opération acquises par la section d'acquisition d'informations d'opération sont des informations indiquant une opération de continuation de mouvement, la section de notification de consignes notifie au dispositif cible de commande une consigne de continuation de mouvement en tant que consigne de notification, et **en ce que**, dans un cas où les informations d'opération acquises par la section d'acquisition d'informations d'opération sont des informations indiquant une opération de fin de mouvement, la section de notification de consignes notifie au dispositif cible de commande une consigne de fin de mouvement en tant que consigne de notification.

4. Appareil de traitement d'informations selon la revendication 3, la section d'acquisition de résultats d'opérations acquérant un résultat en tant que résultat d'opération en provenance du dispositif cible de commande par l'intermédiaire de la section de communication, le résultat étant obtenu en commençant un traitement de déplacement d'un objet prédéterminé par le dispositif cible de commande dans une direction indiquée par les informations de direction de début de mouvement comprises dans la consigne de début de mouvement, en exécutant un traitement de déplacement continu de l'objet prédéterminé par le dispositif cible de commande dans une direction indiquée par les informations de direction de début de mouvement d'après la consigne de continuation de mouvement, et en mettant fin au traitement de déplacement de l'objet prédéterminé par le dispositif cible de commande d'après la consigne de fin de mouvement, et la section d'acquisition de résultats d'opérations acquérant éventuellement, en tant que résultat d'opération en provenance du dispositif cible de commande par l'intermédiaire de la section de communication, des informations de direction valide indiquant une direction dans laquelle l'objet prédéterminé peut être déplacé davantage après l'exécution du traitement de déplacement continu de l'objet prédéterminé effectué par le dispositif cible de commande.

5. Appareil de traitement d'informations selon la revendication 3, la section d'entrée étant constituée d'un panneau tactile, et la section d'acquisition d'informations d'opération acquérant, en tant qu'opération de mouvement, des informations indiquant une opération de balayage effectuée par un utilisateur.

6. Appareil de traitement d'informations selon la revendication 1, **caractérisé en ce que**, dans un cas où les informations d'opération acquises par la section d'acquisition d'informations d'opération sont des informations indiquant une opération de décision, la section de notification de consignes notifie au dispositif cible de commande une consigne de décision en tant que consigne de notification.

7. Appareil de traitement d'informations selon la revendication 6, la section d'entrée étant constituée d'un panneau tactile, et la section d'acquisition d'informations d'opération acquérant, en tant qu'opération de décision, des informations indiquant une opération de tapotement effectuée par un utilisateur.

8. Appareil de traitement d'informations selon la revendication 6, la section d'acquisition de résultats d'opérations acquérant, en tant que résultat d'opération en provenance du dispositif cible de commande par l'intermédiaire de la section de communication, des informations indiquant si un traitement prédéterminé, qui est exécuté par le dispositif cible de commande d'après la consigne de décision, est effectué normalement.

9. Appareil de traitement d'informations selon la revendication 1, la section de commande d'affichage faisant en sorte que la section d'affichage affiche en outre les informations d'opération acquises par la section d'acquisition d'informations d'opération.

10. Procédé de traitement d'informations effectué par un appareil (100) de traitement d'informations comprenant une section (110) d'entrée qui admet une entrée d'informations d'opération, une section (120) de communication qui communique avec un dispositif cible de commande via un signal sans fil, une section (130) d'affichage, une section (142) d'acquisition d'informations d'opération, une section (143) de notification de consignes, une section (141) d'acquisition de résultats d'opérations, et une section (144) de commande d'affichage, comportant :
une étape lors de laquelle la section d'acquisition d'informations d'opération acquiert les informations d'opération par l'intermédiaire de la section d'entrée ;
une étape lors de laquelle la section de notification de consignes crée une consigne de notification d'après les informations d'opération acquises par la section d'acquisition d'informations d'opération, et la section de notification de consignes notifie au dispositif cible de commande la consigne de notification créée par l'intermédiaire de la section de communication ;
une étape lors de laquelle la section d'acquisition de résultats d'opérations acquiert un résultat obtenu par l'exécution d'un traitement effectué par le dispositif cible de commande selon la consigne de notification, en tant que résultat d'opération en provenance du dispositif cible de commande par l'intermédiaire de la section de communication ; et
une étape lors de laquelle la section de commande d'affichage fait en sorte que la section d'affichage affiche le résultat d'opération acquis par la section d'acquisition de résultats d'opérations,
**caractérisé en ce que** les informations d'opération acquises par la section d'acquisition d'informations d'opération sont des informations indiquant une opération de mouvement et la section de notification de consignes notifie au dispositif cible de commande d'une consigne de mouvement comprenant des informations de direction de mouvement indiquant une direction spécifiée par l'opération de mouvement, en tant que consigne de notification et la section d'acquisition de résultats d'opérations acquiert un résultat obtenu par l'exécution d'un traitement de déplacement d'un objet prédéterminé effectué par le dispositif cible de commande d'après les informations de direction de mouvement comprises dans la consigne de mouvement, en tant que résultat d'opération en provenance du dispositif cible de commande par l'intermédiaire de la section de communication et acquiert des informations de direction valide, qui indiquent une direction dans laquelle l'objet prédéterminé peut être déplacé davantage après l'exécution du traitement de déplacement de l'objet prédéterminé effectué par le dispositif cible de commande, en tant que résultat d'opération en provenance du dispositif cible de commande par l'intermédiaire de la section de communication.

11. Programme destiné à faire en sorte qu'un ordinateur réalise le procédé selon la revendication 10.

12. Dispositif cible (200) de commande comportant :
une section de communication qui communique avec un appareil (100) de traitement d'informations via un signal sans fil;
une section d'acquisition de consignes qui acquiert une consigne de notification en provenance de l'appareil de traitement d'informations par l'intermédiaire de la section de communication ;
une section d'exécution de traitement qui exécute un traitement selon la consigne de notification acquise par la section d'acquisition de consignes ; et
une section de notification de résultats d'opérations qui notifie à l'appareil de traitement d'informations un résultat obtenu par l'exécution du traitement effectué par la section d'exécution de traitement en tant que résultat d'opération par l'intermédiaire de la section de communication,
**caractérisé en ce que** la consigne de notification acquise par la section d'acquisition de consignes notifie au dispositif cible de commande une consigne de mouvement comprenant des informations de direction de mouvement indiquant une direction spécifiée par l'opération de mouvement, le résultat d'opération notifié à l'appareil de traitement d'informations par la section de notification de résultats d'opérations étant un résultat obtenu par l'exécution d'un traitement de déplacement d'un objet prédéterminé effectué par le dispositif cible de commande d'après les informations de direction de mouvement comprises dans la consigne de mouvement, et des informations de direction valide notifiées à l'appareil de traitement d'informations par la section de notification de résultats d'opérations indiquant une direction dans laquelle l'objet prédéterminé peut être déplacé davantage après l'exécution du traitement de déplacement de l'objet prédéterminé effectué par le dispositif cible de commande.

13. Système (10) de traitement d'informations camportant :
un appareil (100) de traitement d'informations selon la revendication 1 ; et
un dispositif cible (200) de commande selon la revendication 12.
